# EUROPEAN PATENT APPLICATION

(11) **EP 2 849 530 A1**
(43) Date of publication of application: **18.03.2015**
(21) Application number: 12874385.3
(22) Date of filing: 12.06.2012
(51) Int. Cl.: H04W 88/02

(54) **METHOD AND DEVICE FOR RECEIVING BROADCASTED RADIO SIGNAL OF TELEVISION**

(30) Priority: 16.04.2012 CN 201210111437
(71) Applicant: ZTE Corporation, Shenzhen, Guangdong 518057 (CN)
(72) Inventor: SHANG, Haoqiang, Shenzhen Guangdong 518057 (CN); WAN, Chao, Shenzhen Guangdong 518057 (CN); ZHU, Xiang, Shenzhen Guangdong 518057 (CN); WANG, Ting, Shenzhen Guangdong 518057 (CN); CHEN, Jun, Shenzhen Guangdong 518057 (CN)
(74) Representative: Novagraaf Technologies
(86) International application number: PCT/CN2012/076757
(87) International publication number: WO 2013/155773

(57) **Abstract**

The present invention provides a method and a device for receiving a television wireless broadcast signal. A mobile terminal acquires a geographical location where the mobile terminal is located; the mobile terminal acquires a signal strength corresponding to the geographical location of the mobile terminal from correspondence between a preset geographical location and the signal strength of a television wireless broadcast signal; and the mobile terminal receives the television wireless broadcast signal by using the acquired signal strength. By means of the technical solution, the user experience when the user receives the television wireless broadcast signal is improved.

## Description

### Technical Field

The present invention relates to the field of communications, and in particular to a method and a device for receiving a television wireless broadcast signal.

### Background

The mobile phone television service launched by the State Administration of Radio Film and Television of China realizes the transmission of digital television data in a way of wireless data broadcast. With the vigorous building of wireless broadcast network and the development of mobile phone television reception technology, the mobile phone television service becomes more widely used, and more and more mobile terminals can support the mobile phone television service.

Due to the limitation of the wireless broadcast network itself, the network coverage of the mobile phone television service in many regions is inadequate. Therefore, the terminal supporting the mobile phone television adopts an automatic gain control technology (the reception signal gain of the terminal is increased in the place where the signal is weak, and the reception signal gain of the terminal is decreased in the place where the signal is strong), so that the terminal may normally receive and broadcast the mobile phone television service in the place where the wireless broadcast network signal is week.

With the rapid development of mobile Internet, there are more and more interference sources on various frequency bands, which results in rapid growth of complexity of the air channel and longer time taken to passively finish the automatic gain adjustment. When the mobile phone television service is broadcasted in the process of automatic gain control, the probability that the mobile phone television service shows blurred screen, flicker, and blocking or the like will increase greatly, which seriously affects the user experience.

No effective solution has been proposed for the problem in the related art that the use of automatic gain control for receiving the television wireless broadcast signal results in bad user experience when the user receives the signal.

### Summary

The embodiments of the present invention provide a method and a device for receiving a television wireless broadcast signal, to at least solve the problem in the related art that the use of automatic gain control for receiving the television wireless broadcast signal results in bad user experience when the user receives the signal.

According to one embodiment of the present invention, there is provided a method for receiving television wireless broadcast signal, including: acquiring, by a mobile terminal, a geographical location where the mobile terminal is located; acquiring, by the mobile terminal, a signal strength corresponding to the geographical location of the mobile terminal from correspondence between a preset geographical location and the signal strength of a television wireless broadcast signal; and receiving, by the mobile terminal, a television wireless broadcast signal by using the acquired signal strength.

In the described embodiment, after receiving, by the mobile terminal, the television wireless broadcast signal by using the acquired signal strength, the method further includes: acquiring, by the mobile terminal, information of a television channel corresponding to the geographical location of the mobile terminal from correspondence between a preset geographical location and a television channel; and receiving, by the mobile terminal, a signal of the television channel corresponding to the information.

In the described embodiment, before acquiring, by the mobile terminal, the information of the television channel corresponding to the geographical location of the mobile terminal from the correspondence between the preset geographical location and the television channel, the method further includes: determining, by the mobile terminal, the information of the television channel corresponding to the preset geographical location in one of the following ways: time length, reception frequency within unit time, and user setting.

In the described embodiment, before acquiring, by the mobile terminal, the signal strength corresponding to the geographical location of the mobile terminal from the correspondence between the preset geographical location and the signal strength of the television wireless broadcast signal, the method further includes: determining, by the mobile terminal, the signal strength of the television wireless broadcast signal received on the preset geographical location that meets a predetermined condition.

In the described embodiment, acquiring, by the mobile terminal, the geographical location where the mobile terminal is located includes: acquiring, by the mobile terminal, the geographical location where the mobile terminal is located in one of the following ways:
Global Positioning Service (GPS), BeiDou, Glonass and Galileo.

According to another embodiment of the present invention, a device for receiving television wireless broadcast signal is provided. The device is applied to a mobile terminal and includes: a first acquiring component, configured to acquire a geographical location where the mobile terminal is located; a second acquiring component, configured to acquire, from correspondence between a preset geographical location and the signal strength of a television wireless broadcast signal, a signal strength which corresponds to the geographical location of the mobile terminal and is configured to receive the television wireless broadcast signal; and a first receiving component, configured to receive the television wireless broadcast signal by using the acquired signal strength.

In the described embodiment, the device further includes: a third acquiring component, configured to acquire information of a television channel corresponding to the geographical location of the mobile terminal from correspondence between a preset geographical location and a television channel; and a second receiving component, configured to receive a signal of the television channel corresponding to the information.

In the described embodiment, the device further includes: a first determining component, configured to determine the television channel corresponding to the preset geographical location in one of the following ways: time length, reception frequency within unit time, and user setting.

In the described embodiment, the device further includes: a second determining component, configured to determine the signal strength of the television wireless broadcast signal received on the preset geographical location that meets a predetermined condition.

In the described embodiment, the first acquiring component acquires the geographical location where the mobile terminal is located in one of the following ways: Global Positioning Service (GPS), BeiDou, Glonass and Galileo.

According to the embodiments of the present invention, the mobile terminal acquires the signal strength corresponding to the geographical location of the mobile terminal from correspondence between a preset geographical location and the signal strength of a television wireless broadcast signal, and then receives the television wireless broadcast signal by using the acquired signal strength, so that the mobile terminal may receive the television signals in the predetermined geographical location by using the signal strength corresponding to the geographical location. Therefore, the problem in the related art that the use of automatic gain control for receiving the television wireless broadcast signal results in bad user experience when the user receives the signal is solved, thereby achieving the effect of improving the experience of the user receiving the television signal.

### Brief Description of the Drawings

The accompanying drawings described herein serve to provide a further understanding of the present invention, and constitute a part of this application. The schematic embodiments of the present invention and description thereof serve to explain the present invention rather than to limit the present invention inappropriately. In the drawings:
Fig. 1 is a flowchart of a method for receiving a television wireless broadcast signal according to an embodiment of the present invention;
Fig. 2 is a structure diagram of a device for receiving a television wireless broadcast signal according to an embodiment of the present invention;
Fig. 3 is an example structure diagram of a device for receiving a television wireless broadcast signal according to an embodiment of the present invention;
Fig. 4 is a system structure drawing of a scheme for optimizing mobile phone television signal gain and user resident channel switching according to an embodiment of the present invention;
Fig. 5 is a flowchart of acquiring mobile phone television signal statistics and user resident channel statistics according to an embodiment of the present invention; and
Fig. 6 is a flowchart of controlling the broadcast of a mobile phone television service according to mobile phone television signal statistics and user resident channel information according to an embodiment of the present invention.

### Detailed Description of the Embodiments

Hereinafter, the present invention will be described in detail with reference to the accompanying drawings and in conjunction with the embodiments. It should be noted that the embodiments of the application and the features of the embodiments can be combined with each other without any conflict.

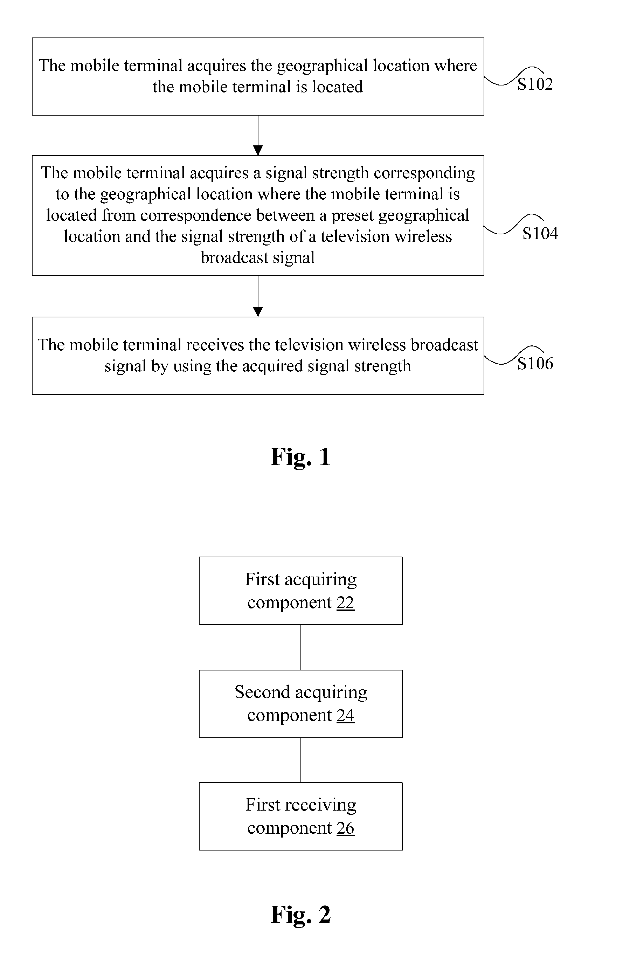

The embodiment provides a method for receiving television wireless broadcast signal. Fig. 1 is a flowchart of a method for receiving a television wireless broadcast signal according to an embodiment of the present invention. As shown in Fig. 1, the method includes the following Step S102 to Step S106:
Step S102: The mobile terminal acquires a geographical location where the mobile terminal is located.
Step S104: The mobile terminal acquires a signal strength corresponding to the geographical location where the mobile terminal is located from correspondence between a preset geographical location and the signal strength of a television wireless broadcast signal.
Step S106: The mobile terminal receives the television wireless broadcast signal by using the acquired signal strength.

From the above steps, the mobile terminal acquires the signal strength corresponding to the geographical location of the mobile terminal from correspondence between a preset geographical location and the signal strength of a television wireless broadcast signal, and then receives the television wireless broadcast signal by using the acquired signal strength, so that the mobile terminal may receive the television signals in the predetermined geographical location by using the signal strength corresponding to the geographical location. Therefore, the problem in the related art that the use of automatic gain control for receiving the television wireless broadcast signal results in bad user experience when the user receives the signal is solved, thereby achieving the effect of improving the experience of the user receiving the television signal.

The contents of the mobile phone television service in different provinces and cities may be very different. Users in different provinces and cities have different mobile phone television watching habits. However, when moving across provinces and cities, the user needs to search again and switches to the channel that he wants to watch, which results in the trouble of user operation, and brings great inconvenience to the user. The embodiment provides an example embodiment in which after Step S106, the mobile terminal may acquire the information of the television channel corresponding to the geographical location of the mobile terminal from correspondence between a preset geographical location and a television channel, and then the mobile terminal receives the signal of the television channel corresponding to this acquired information. In this way, when the mobile terminal moves for many times and returns to the original position, the mobile terminal may receive the signal of the preset television channel, which avoids repeated searching, brings more convenience to the user, thereby improving the user experience.

In implementation process, it is possible to determine the information of the television channel corresponding to the preset geographical location according to user needs or system settings. For example, the mobile terminal may determine the information of the television channel corresponding to the preset geographical location in one of the following ways: time length, reception frequency within unit time, and user setting. In the example embodiment, many ways are provided to determine the information of the television channel corresponding to the preset geographical location, thereby improving the flexibility of determining the television channel on the preset geographical location.

During implementation, before Step S104, the mobile terminal may determine the signal strength of the television wireless broadcast signal received on the preset geographical location that meets a predetermined condition. For example, the terminal location information, for example latitude and longitude information, may be acquired through locating, and the strength of the television wireless broadcast signal normally received by the mobile terminal on the geographical location may be recorded, more preferably, the following two ways may be adopted:
Way I: The strength of the signal of the geographical location is directly recorded.
Way II: The signal reception gain of the geographical location is recorded according to the statistics of the received signal strength of the geographical location.

In order to improve the flexibility of acquiring the geographical location of the mobile terminal, the geographical location where the mobile terminal is located may be acquired in one of the following ways: Global Positioning Service (GPS), BeiDou, Glonass and Galileo.

It should be noted that the steps shown in the flowchart of the accompanying drawings may be executed in a computer system of such as a group of computer-executable instructions. In addition, although a logic sequence is shown in the flowchart, in some cases, the steps shown or described herein may be executed in an order different from here.

In another embodiment, there is also provided software for receiving television wireless broadcast signal. The software is configured to execute the technical schemes described in the above embodiments and example embodiments.

In another embodiment, there is also provided a storage medium. The storage medium stores the software for receiving television wireless broadcast signal. The storage medium includes but is not limited to optical disk, floppy disk, hard disk and rewritable memory or the like.

The embodiment of the present invention also provides a device for receiving television wireless broadcast signal. The device may be applied to a mobile terminal. The device for receiving television wireless broadcast signal may be used for implementing the method for receiving television wireless broadcast signal and example embodiments, what has been described is not explained herein. The components involved in the device for receiving television wireless broadcast signal will be described below. As used below, term "component" may implement the combination of software and/or hardware of predetermined functions. Although the system and the method described in the following embodiments are preferably implemented in software, it is possible and conceived that hardware, or a combination of software and hardware may be used for implementation.

Fig. 2 is a structure diagram of a device for receiving a television wireless broadcast signal according to an embodiment of the present invention. As shown in Fig. 2, the device includes a first acquiring component 22, a second acquiring component 24, and a first receiving component 26. The above structure will be described in detail below.

The first acquiring component 22 is configured to acquire a geographical location where the mobile terminal is located; the second acquiring component 24 is coupled to the first acquiring component 22 and configured to acquire a signal strength corresponding to the geographical location of the mobile terminal acquired by the first acquiring component 22 and configured to receive the television wireless broadcast signal from correspondence between the preset geographical location and the strength of the television wireless broadcast signal; and the first receiving component 26 is coupled to the second acquiring component 24 and configured to receive the television wireless broadcast signal by using the signal strength acquired by the second acquiring component 24.

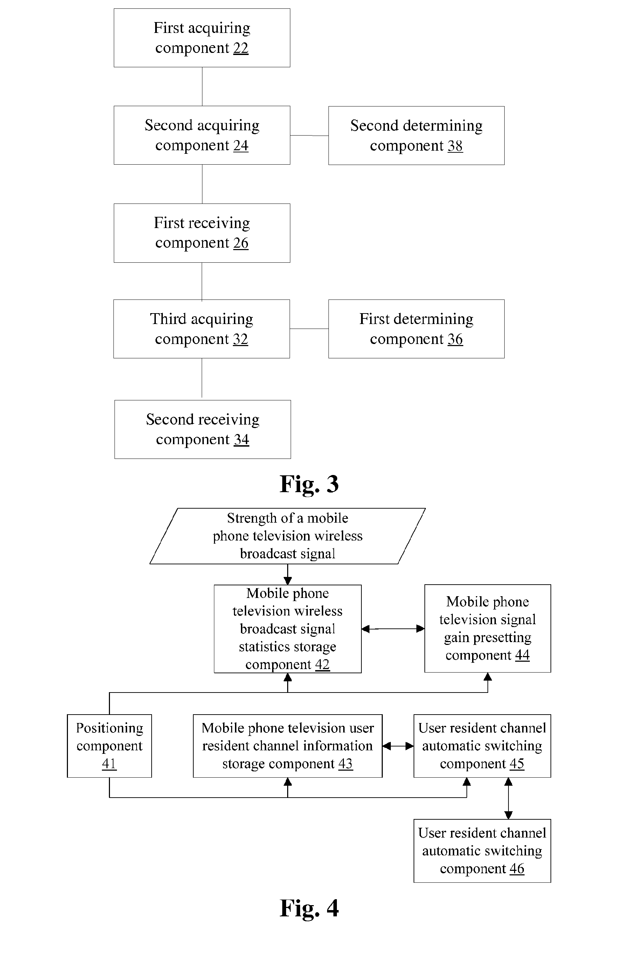

Fig. 3 is an example structure diagram of a device for receiving a television wireless broadcast signal according to an embodiment of the present invention. As shown in Fig. 3, the device further includes a third acquiring component 32, a second receiving component 34, a first determining component 36 and a second determining component 38. The above structure will be described in detail below.

The third acquiring component 32 is coupled to the first receiving component 26 and configured to acquire information of a television channel corresponding to the geographical location of the mobile terminal from correspondence between a preset geographical location and a television channel; and the second receiving component 34 is coupled to the third acquiring component 32 and configured to receive a signal of the television channel corresponding to the information received by the third acquiring component 32.

Preferably, the above device may further includes a first determining component 36, which is coupled to the third acquiring component 32 and configured to determine the television channel corresponding to the preset geographical location in one of the following ways: time length, reception frequency within unit time, and user setting.

Preferably, the above device may further includes a second determining component 38, which is coupled to the second acquiring component 24 and configured to determine the signal strength of the television wireless broadcast signal received on the preset geographical location that meets a predetermined condition.

Preferably, the first acquiring component 22 acquires the geographical location where the mobile terminal is located in one of the following ways: Global Positioning Service (GPS), BeiDou, Glonass and Galileo.

Description will be given below in conjunction with example embodiments. The following example embodiments combine the above embodiments and example embodiments.

### Example Embodiment I

The example embodiment provides a device for receiving television wireless broadcast signal, which is applied to a mobile terminal. Fig. 4 is a structure diagram of a device for optimizing mobile phone television signal gain and user resident channel switching according to an embodiment of the present invention. As shown in Fig. 4, the device includes a positioning component 41 (the component is configured to execute the function of the first acquiring component 22 in the above embodiments), a mobile phone television wireless broadcast signal statistics storage component 42 (the second determining component 38), a mobile phone television user resident channel information storage component 43 (the component is configured to execute the function of the first determining component 36 in the above embodiments), a mobile phone television signal gain presetting component 44, a user resident channel automatic switching permission setting component 45, and a user resident channel automatic switching component 46 (the component is configured to execute the function of the second receiving component 34 in the above embodiments). The above structure will be described in detail below.

The positioning component 41 is configured to acquire the geographical information at the location where the terminal is located, for example latitude and longitude information. The mobile phone television wireless broadcast signal statistics storage component 42 is configured to establish and store statistics information of the television wireless broadcast signal of the mobile phone based on the geographical information of the terminal location. The mobile phone television user resident channel information storage component 43 is configured to establish and store the user resident channel information based on the geographical information of the terminal location. The mobile phone television signal gain presetting component 44 is configured to set the gain required by the terminal to receive the mobile phone television signal on the current position. The user resident channel automatic switching permission setting component 45 is configured to set and store whether the user allows the terminal to switch to the resident channel automatically. The user resident channel automatic switching component 46 is configured to switch the mobile phone television to the resident channel automatically.

### Example Embodiment II

The embodiment provides a method for establishing signal strength of mobile phone television. In conjunction with the component of the device according to Example Embodiment I, the method includes the following Step S2 to Step S22.

Step S2: The terminal location information, mainly the latitude and longitude information, is acquired through the positioning component.

Step S4: The strength of the mobile phone television wireless broadcast signal at the location where the terminal is located is recorded.

Step S6: The channel which the mobile phone television broadcasts for the longest time at the location where the terminal is located is recorded.

Step S8: In conjunction with the location information acquired in Step S2, the statistics of the mobile phone television wireless broadcast signal acquired in Step S4 is established (collected) and stored.

Step S10: In conjunction with the location information acquired in Step S2, the user resident channel information of the mobile phone television acquired in Step S6 is established and stored.

Step S12: The current location information of the terminal is acquired through the positioning component when the user selects to use the mobile phone television service.

Step S14: The terminal looks for the statistics of the mobile phone television broadcast signal strength corresponding to the location information acquired in Step S12 from the mobile phone television broadcast signal statistics acquired in Step S8.

Step S16: The mobile phone signal reception gain of the terminal on the current position is preset according to the statistics of the mobile phone television broadcast signal strength of the current position acquired in Step S14.

Step S18: The terminal looks for the user resident channel information corresponding to the location information acquired in Step S12 from the mobile phone television user resident channel information acquired in Step S10.

Step S20: The automatic switching permission of the user resident channel is inquired.

Step S22: If the permission that allows the automatic switching of the user resident channel can be acquired in Step S20, the terminal switches to the user resident channel automatically. If the permission that allows the automatic switching of the user resident channel is not acquired in Step S20, the terminal returns to regular mobile phone television service broadcast process.

Through the technical schemes proposed in above Example Embodiment I and Example Embodiment II, the problem that the mobile phone television shows blurred screen, mosaic and flash screen or the like during broadcasting probabilistically in the process of automatic gain control and the user needs to switch to his commonly used channel when moving to other cities is solved, which not only can save the time required by the terminal to perform automatic gain control, improve the response speed of the terminal from entering the mobile phone television to broadcasting, and reduce the probability that the mobile phone television shows blurred screen, mosaic and flash screen or the like during broadcasting greatly, but also can realize supporting the terminal automatic switching to the channel that the user wants to watch, convenient for user to watch, and improve the user experience.

### Example Embodiment III

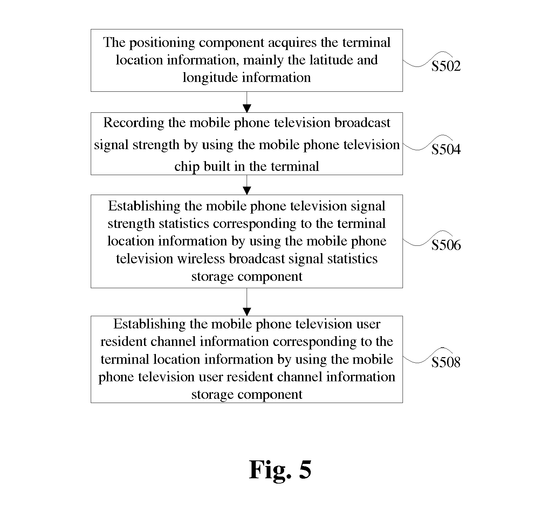

The embodiment provides a method for acquiring mobile phone television signal statistics and user resident channel statistics. Fig. 5 is a flowchart of acquiring mobile phone television signal statistics and user resident channel statistics according to an embodiment of the present invention. As shown in Fig. 5, the method includes the following Step S502 to Step S508.

Step S502: The positioning component acquires the terminal location information through GPS, mainly the latitude and longitude information.

The positioning component may acquire the terminal location information through GPS, BeiDou, Glonass and Galileo or the like. In the embodiment, the positioning component acquires the terminal location information through GPS.

Step S504: The strength of the mobile phone television broadcast signal is recorded by using the mobile phone television chip built in the terminal.

Step S506: The mobile phone television signal strength statistics corresponding to the location information in Step S502 is established by using the mobile phone television wireless broadcast signal statistics storage component.

It should be noted that the main factors influencing the strength of the wireless broadcast signal are base station address, topography, and building coverage. Since these factors do not change within a longer period, the wireless television signal strength at some point is stable. In order to eliminate the interference of other factors, an algorithm of multi-sampling and then averaging is adopted, and all of the latest values of the wireless broadcast signal acquired by the terminal at the position are fed back and included in the mean calculation in time.

Step S508: The mobile phone television user resident channel information corresponding to the location information in Step S502 is established by using the mobile phone television user resident channel information storage component.

For example, in the case that the terminal location is determined, the broadcasting time length of each channel of the mobile phone television is recorded. Taking the mobile phone television having 8 channels as an example, if the broadcasting time length of channel 1 is the longest in the mobile phone television user resident channel information storage component, the channel 1 is identified as the user resident channel when the user is at the position.

### Example Embodiment IV

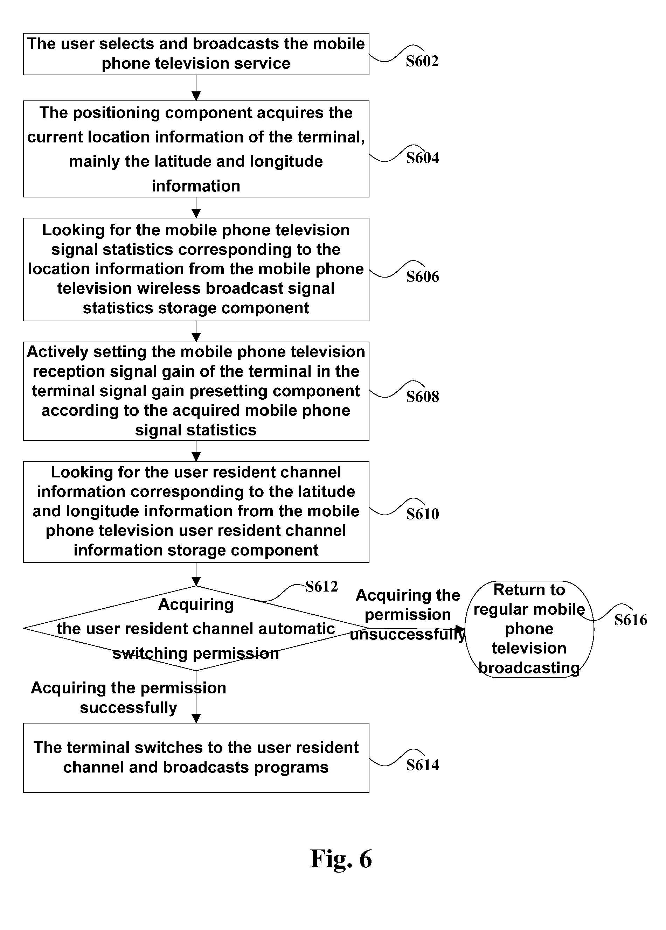

The embodiment provides a method for controlling the broadcast of a mobile phone television service according to mobile phone television signal statistics and user resident channel information. Fig. 6 is a flowchart of controlling the broadcast of a mobile phone television service according to mobile phone television signal statistics and user resident channel information according to an embodiment of the present invention. As shown in Fig. 6, the method includes the following Step S602 to Step S616.

Step S602: The user selects and broadcasts the mobile phone television service.

Step S604: The positioning component acquires the current location information of the terminal through GPS, mainly the latitude and longitude information.

Step S606: The terminal looks for the mobile phone television signal statistics corresponding to the location information from the mobile phone television wireless broadcast signal statistics storage component, for example, looks for the mean value of the mobile phone television signal strength of the current position according to a latitude/longitude coordinate.

Step S608: The mobile phone television reception signal gain of the terminal is actively set in the terminal signal gain presetting component according to the mobile phone signal statistics acquired in Step S606.

Preferably, in the step, it is possible to judge the signal state according to the acquired mean value of the mobile phone television signal strength. For example, the signal strength is divided into 5 levels from good to bad. The mobile phone television signal reception gain is set correspondingly according to different levels.

Step S610: The terminal looks for the user resident channel information corresponding to the latitude and longitude information from the mobile phone television user resident channel information storage component, for example, looks for the channel for which the broadcasting time length of the terminal of the current position is the longest according to a latitude/longitude coordinate. In the embodiment, if the broadcasting time length of channel 1 is the longest, the channel 1 is the user resident channel of the current position.

Step S612: The current permission setting of the user is acquired from the user resident channel automatic switching permission setting component. For example, the user resident channel automatic switching permission is set by user. In the embodiment, a new project is newly added to the menu item of the mobile phone television, so that the user selects whether to allow the automatic switching of the user resident channel, and then saves the setting.

It is judged whether the user resident channel automatic switching permission can be acquired. If acquiring the permission fails, return to regular mobile phone television service broadcasting Step S616. If acquiring the permission succeeds, execute Step S614.

Step S614: The terminal switches to the user resident channel and broadcasts programs.

Step S616: Return to regular mobile phone television broadcasting.

Through the above embodiments, there is provided a method and a device for receiving a television wireless broadcast signal. In this way, the mobile terminal actively sets the reception gain of the mobile phone television signal according to location signal during mobile phone television broadcasting, and may switch to the user resident channel automatically according to user's permission setting, thereby being capable of saving time consumed in automatic gain control, and improving the response time from entering the mobile phone television to normal broadcasting, reducing the probability that the mobile phone television shows blurred screen, mosaic and flash screen or the like during broadcasting, enhancing the user experience, and automatically switching to the user resident channel, recording user's habits, simplifying user operation, which is convenient for user to watch the mobile phone television service. It should be noted that these technical effects are not those that all of the above embodiments have, and some technical effects are only achieved by some example embodiments.

Obviously, those skilled in the art should understand that each of the above components or steps of the present invention can be realized by a universal computing device; the components or steps can be focused on single computing device, or distributed on the network formed by multiple computing devices. Selectively, they can be realized by a program code which can be executed by the computing device. Thereby, the components or steps can be stored in the storage device and executed by the computing device, or can be independently manufactured as each integrated circuit component, or multiple components or steps thereof can be manufactured to be single integrated circuit component, thus to be realized. In this way, the present invention is not restricted to any particular hardware and software combination.

The above is only the example embodiment of the present invention and not intended to limit the present invention, for those skilled in the art, various changes and variations can be made to the present invention. Any modifications, equivalent replacements, improvements and the like within the principle of the present invention shall fall within the scope of protection as defined in the appended claims of the present invention.

## Claims

1. A method for receiving a television wireless broadcast signal, **characterized by** comprising:
acquiring, by a mobile terminal, a geographical location where the mobile terminal is located;
acquiring, by the mobile terminal, a signal strength corresponding to the geographical location of the mobile terminal from correspondence between a preset geographical location and the signal strength of a television wireless broadcast signal; and
receiving, by the mobile terminal, a television wireless broadcast signal by using the acquired signal strength.

2. The method according to claim 1, **characterized in that** after receiving, by the mobile terminal, the television wireless broadcast signal by using the acquired signal strength, the method further comprises:
acquiring, by the mobile terminal, information of a television channel corresponding to the geographical location of the mobile terminal from correspondence between a preset geographical location and a television channel; and
receiving, by the mobile terminal, a signal of the television channel corresponding to the information.

3. The method according to claim 2, **characterized in that** before acquiring, by the mobile terminal, the information of the television channel corresponding to the geographical location of the mobile terminal from the correspondence between the preset geographical location and the television channel, the method further comprises:
determining, by the mobile terminal, the information of the television channel corresponding to the preset geographical location in one of the following ways:
time length, reception frequency within unit time, and user setting.

4. The method according to claim 1, **characterized in that** before acquiring, by the mobile terminal, the signal strength corresponding to the geographical location of the mobile terminal from the correspondence between the preset geographical location and the signal strength of the television wireless broadcast signal, the method further comprises:
determining, by the mobile terminal, the signal strength of the television wireless broadcast signal received on the preset geographical location that meets a predetermined condition.

5. The method according to any one of claims 1 to 4, **characterized in that** acquiring, by the mobile terminal, the geographical location where the mobile terminal is located comprises:
acquiring, by the mobile terminal, the geographical location where the mobile terminal is located in one of the following ways:
Global Positioning Service (GPS), BeiDou, Glonass and Galileo.

6. A device for receiving television wireless broadcast signal, **characterized in that** the device is applied to a mobile terminal and comprises:
a first acquiring component, configured to acquire a geographical location where the mobile terminal is located;
a second acquiring component, configured to acquire, from correspondence between a preset geographical location and the signal strength of a television wireless broadcast signal, a signal strength which corresponds to the geographical location of the mobile terminal and is configured to receive the television wireless broadcast signal; and
a first receiving component, configured to receive the television wireless broadcast signal by using the acquired signal strength.

7. The device according to claim 6, **characterized by** further comprising:
a third acquiring component, configured to acquire information of a television channel corresponding to the geographical location of the mobile terminal from correspondence between a preset geographical location and a television channel; and
a second receiving component, configured to receive a signal of the television channel corresponding to the information.

8. The device according to claim 7, **characterized by** further comprising:
a first determining component, configured to determine the television channel corresponding to the preset geographical location in one of the following ways:
time length, reception frequency within unit time, and user setting.

9. The device according to claim 6, **characterized by** further comprising:
a second determining component, configured to determine the signal strength of the television wireless broadcast signal received on the preset geographical location that meets a predetermined condition.

10. The device according to any one of claims 6 to 9, **characterized in that** the first acquiring component acquires the geographical location where the mobile terminal is located in one of the following ways:
Global Positioning Service (GPS), BeiDou, Glonass and Galileo.
